# EUROPEAN PATENT APPLICATION

(11) **EP 1 480 292 A2**
(43) Date of publication of application: **24.11.2004**
(21) Application number: 04252382.9
(22) Date of filing: 23.04.2004
(51) Int. Cl.: H01R 12/04

(54) **Connector assembly**

(30) Priority: 22.05.2003 JP 2003145181
(71) Applicant: Tyco Electronics AMP K.K., Kawasaki-shi, Kanagawa 213-8535 (JP)
(72) Inventor: Takemasa, Eiichiro c/o Tyco Electronics AMP K.K., Kawasaki-shi, Kanagawa-ken 213-8535 (JP)
(74) Representative: Johnstone, Douglas Ian

(57) **Abstract**

The connector assembly comprises a first connector (A) having a plurality of first boards (26) which have conductor patterns formed on the surfaces thereof, a second connector (B) having a plurality of second boards which have conductor patterns formed on the surfaces thereof, and a relay connector (C) which is attached to the first connector (A) or second connector (B). In the relay connector (C), a plurality of female type contacts (50) are press-fitted. The contacts (50) have first female type contact parts that contact the conductor patterns of the first boards (26) and second female type contact parts that contact the conductor patterns of the second boards 64 are press-fitted. This arrangement allows the easy replacement of the easily damaged female type contacts (50). The assembly can be used in data transfer systems such as communications devices that transmit data signals at a high speed.

## Description

The present invention relates to a connector assembly used in data transfer systems such as communications devices that transmit data signals at a high speed.

In connectors used in data transfer systems such as communications devices that transmit data signals at high speeds, e.g., at speeds exceeding 2 Gbps, the impedance of the signal paths inside the connector must be maintained at a uniform value.

For example, the connector shown in Figs. 8 and 9 of Patent US 6171115 is known as a conventional connector of this type.

This connector 101 comprises an insulating housing 110 and a plurality of boards 120 that are supported in a row in the housing 110. Each board 120 is constructed from an insulating board material such as FR4, and has a plurality of signal conductor patterns 121 and a plurality of ground conductor patterns 122 that are formed so that the ground conductor patterns surround the signal conductor patterns 121 with a specified distance retained between the respective patterns. These patterns are disposed on the front and back surfaces of each board 120. The signal conductor patterns 121 extend from the mating end parts 123 of the boards 120 on the side where a mating connector (not shown in the figures) is mated to the mounting end parts 124 of the boards 120 on the side where a circuit board (not shown in the figures) is connected. The ground conductor patterns 122 extend from points located slightly to the inside of the mating end parts 123 of the boards 120 on the side where the mating connector is mated to the mounting end parts 124 of the boards 120 on the side where the circuit board is connected. A plurality of contacts 130 that are connected to the signal conductor patterns 121 and the ground conductor patterns 122 are disposed on the mounting end parts 124 of the respective boards 120.

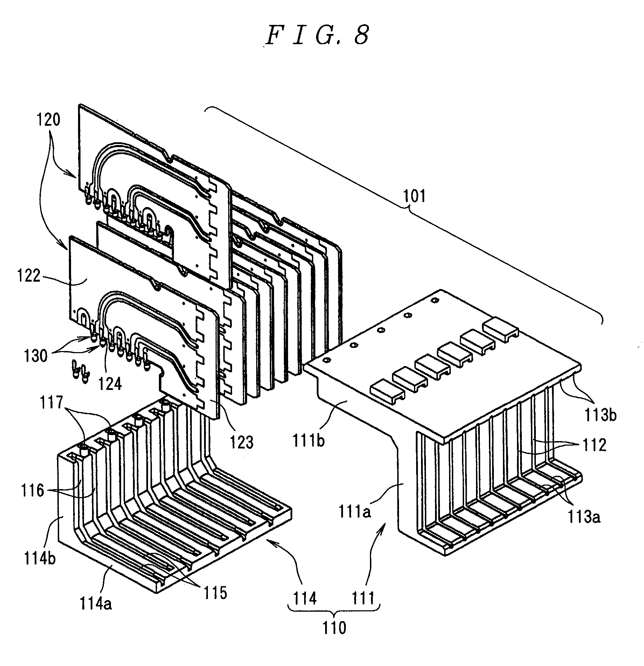

Meanwhile, the housing 110 comprises a front part housing 111 and an accommodating body 114. The front part housing 111 comprises a vertical wall 111a that extends in the vertical direction, and a top part 11b that extends rearward (to the left in Fig. 8) from the upper end of the vertical wall 111a. A plurality of slits 112, which pass through in the forward-rearward direction, and through which the mating end parts 123 of the respective boards 120 are passed, are formed in the vertical wall 111a, and grooves 113a and 113b, into which the lower ends and upper ends of the mating end parts 123 of the respective boards 120 are respectively inserted, are respectively formed in a protruding wall that extends forward from the lower end of the vertical wall 111a and a protruding wall that extends forward from the upper end of the vertical wall 111a. Furthermore, the accommodating body 114 comprises a platform part 114a that extends in the forward-rearward direction, and a rear vertical wall part 114b that extends upwardly from the rear end of the platform part 114a. A plurality of grooves 115, into which the mounting end parts 124 of the respective boards 120 are inserted, are formed in the platform part 114a, and a through-hole (not shown in the figures), through which one of the contacts 130 connected to the signal conductor patterns 121 and ground conductor patterns 122 is passed, is formed in each groove 115. Furthermore, a plurality of grooves 116, into which the mating end parts 123 of the respective boards 120 are inserted, are formed in the rear vertical wall part 114b. Moreover, engaging posts 117, that engage with the top part 111b of the front part housing 111, are formed on the upper end surface of the rear vertical wall part 114b.

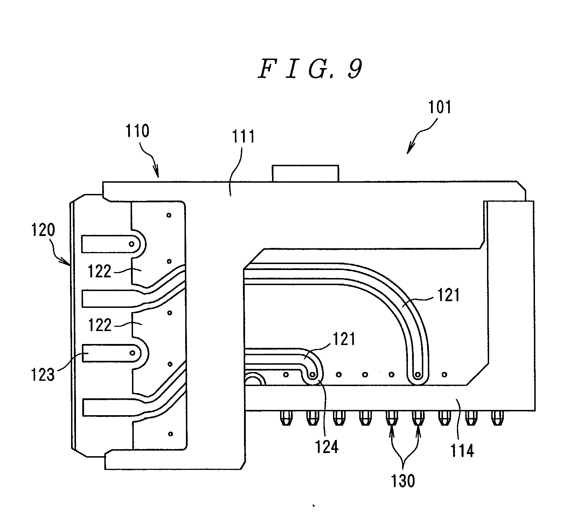

In the connector 101 disclosed in these Figs. 8 and 9, the signal conductor patterns 121 formed on the side of the mating end parts 123 of the respective boards 120 are utilized as male type contacts, and are mated and connected with female type contacts (not shown in the figures) disposed on the side of the mating connector. Furthermore, the plurality of contacts 130 disposed on the mounting end parts 124 of the respective boards 120 are connected to the circuit board. As a result, the impedance of the signal paths inside the connector 101 can be maintained at a uniform value, so that data signals can be transmitted at a high speed.

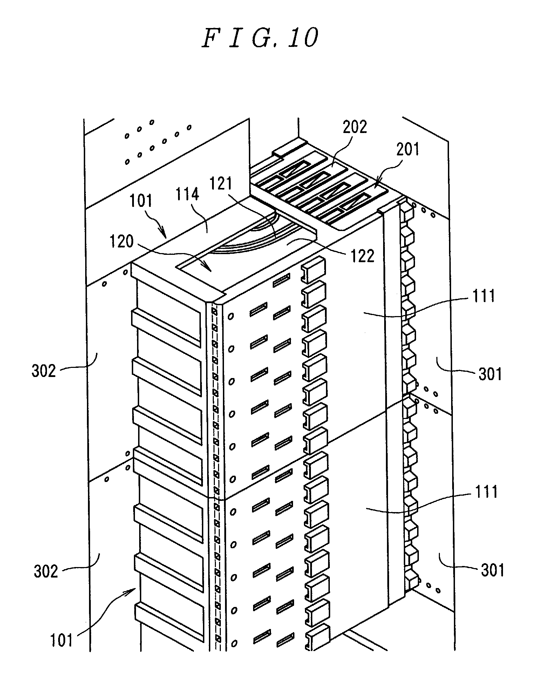

Furthermore, Fig. 10 of Patent US 6384341 discloses a configuration in which multi-layer boards 301 and 302 are connected to each other by a connector assembly comprising a first connector 101 shown in Figs. 8 and 9 and a second connector 201 that is mated with this first connector 101.

Specifically, in the first connector 101, the signal conductor patterns 121 formed on the side of the mating end parts 123 (see Fig. 9) of the respective boards 120 are utilized as male type contacts, and are mated and connected with female type contacts 202 disposed in the second connector 201. Furthermore, the male type contacts 202 of the second connector 201 are connected to the multi-layer board 301. Moreover, the plurality of contacts 130 disposed on the mounting end parts 124 (see Fig. 9) of the respective boards 120 are connected to the multi-layer board 302. As a result, the impedance of the signal paths inside the connector assembly comprising the first connector 101 and second connector 201 can be maintained at a uniform value, so that data signals can be transmitted at a high speed.

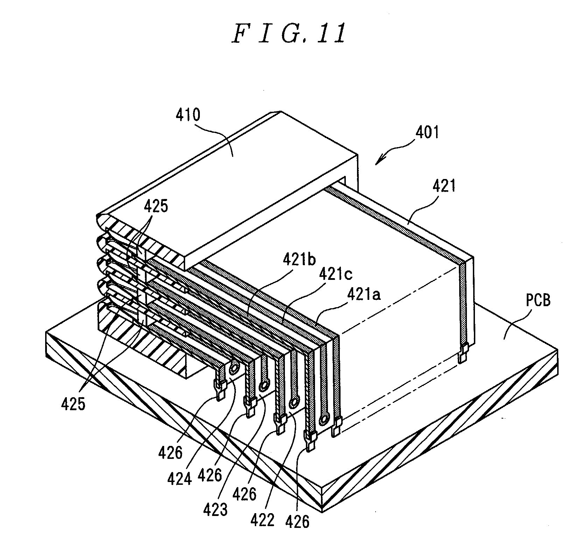

Furthermore, Fig. 11 of laid-open Japanese patent application H5-21119 discloses a connector 401 in which a plurality of female type contacts 425 are connected to the respective end parts of a plurality of lead film boards 421, 422, 423 and 424, and these female type contacts 425 are secured inside a housing 410. A plurality of signal conductor patterns 421a and ground conductor patterns 421b are formed on the surfaces of the respective lead film boards 421, 422, 423 and 424, and the female type contacts 425 are connected by soldering connections to one end part of each of the conductor patterns 421a and 421b. Furthermore, contacts 426 that are connected to a circuit board PCB are disposed on the other end parts of the respective conductor patterns 421a and 421b. Moreover, in Fig. 11, the symbol 421c indicates shielding patterns for preventing crosstalk.

However, the following problems have been encountered in the conventional connector assembly shown in Fig. 10 and connector shown in Fig. 11.

Specifically, in the connector assembly shown in Fig. 10, since the female type contacts 202 disposed inside the second connector 201 have a structure in which these contacts make receiving contact or elastic contact with the signal conductor patterns 121 (formed on the respective boards 120) used as male type contacts during mating with these male type contacts, these female type contacts are susceptible to damage at the time of mating with the male type contacts. Consequently, as insertion and extraction of the first connector 101 and second connector 201 are repeated, there is a high probability that damaged female type contacts 202 will be generated. Accordingly, it is desirable that it be easy to replace damaged female type contacts 202. However, in cases where such damaged female type contacts 202 are replaced, it is necessary to release the connection of all of the female type contacts 202 with the multi-layer board 301, to remove the second connector 201 from the multi-layer board 301, and to remove the female type contact 202 in question from the housing of the second connector 201; accordingly, such replacement is not easily accomplished.

Furthermore, in the case of the connector shown in Fig. 11 as well, when damaged female type contacts 425 are to be replaced, it is necessary to release the connection of the contacts 426 connected to the circuit board PCB from the circuit board PCB, to remove the connector 401 from the circuit board PCB, to remove the lead film board to which the female type contact 425 in question is attached from the housing 410, and to remove the female type contact 425 in question from the lead film board, so that such replacement is not easily accomplished.

Accordingly, the present invention was devised in the light of the problems described above. It is an object of the present invention to provide a connector assembly which allows the easy replacement of easily damaged female type contacts, and which can be used in data transfer systems such as communications devices that transmit data signals at a high speed.

In order to solve the problems described above, the connector assembly according to Claim 1 comprises a first connector having a plurality of first boards which have conductor patterns formed on the surfaces thereof, a second connector having a plurality of second boards which have conductor patterns formed on the surfaces thereof, and a relay connector which is attached to the first connector or second connector, and in which a plurality of female type contacts having first female type contact parts that contact the conductor patterns of the first boards and second female type contact parts that contact the conductor patterns of the second boards are press-fitted.

Here, the term "female type contact part" includes both cases in which the conductor patterns on the board surfaces are contacted with the end parts of the first board received, and cases in which the conductor patterns on the board surfaces are elastically contacted without receiving the end parts the first board.

Furthermore, in the connector assembly according to dependent Claim 2 the first connector is mounted on a motherboard, and a plurality of electrical wires are connected by soldering to the second boards of the second connector.

The invention will now be described by way of example only with reference to the accompanying drawings in which:
Fig. 1 is an exploded perspective view of the connector assembly of the present invention;
Fig. 2 is a perspective view showing the first connector and relay connector attached;
Figs. 3(A) and 3(B) show the attached first connector and relay connector shown in Fig. 2, with Fig. 3 (A) being a front view, and Fig. 3 (B) being a sectional view along line 3B-3B in Fig. 3 (A);
Fig. 4 is a perspective view of one of the contacts used in the first connector;
Fig. 5 is a perspective view of one of the female type contacts used in the relay connector;

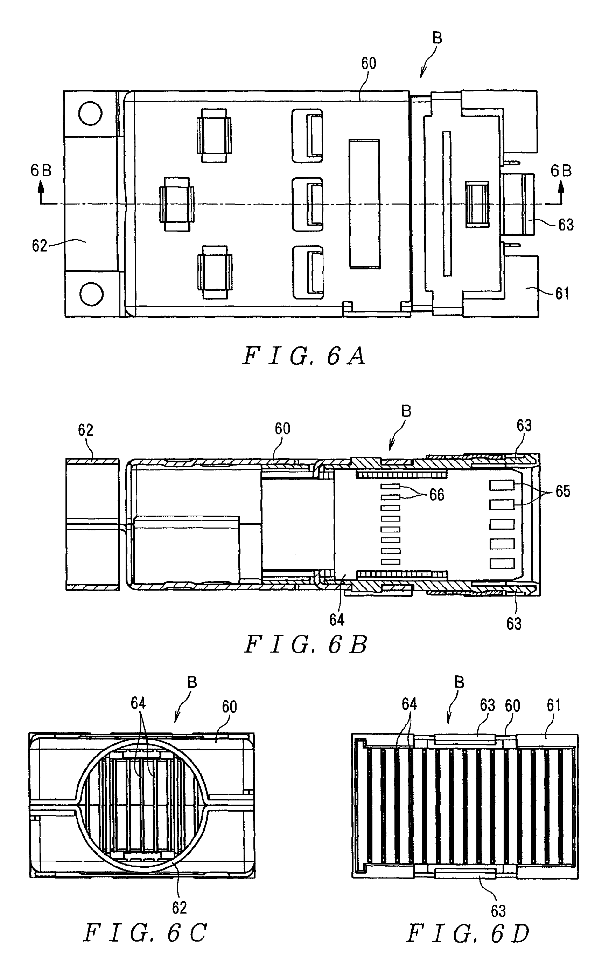

Figs. 6(A) to (D) show the second connector, with Fig. 6 (A) being a plan view, Fig. 6 (B) being a sectional view along line 6B-6B in Fig. 6 (A), Fig. 6 (C) being a left-side view, and Fig. 6 (D) being a right-side view;
Fig. 7 is an explanatory diagram used to illustrate the connection of electrical wires to the second boards in the second connector;
Fig. 8 is a perspective view of a conventional connector used in data transfer systems such as communications devices that transmit data signals at a high speed;
Fig. 9 is a side view of the connector shown in Fig. 8;
Fig. 10 is a perspective view of a conventional example of a connector assembly; and
Fig. 11 is a sectional perspective view of a conventional example of a connector.

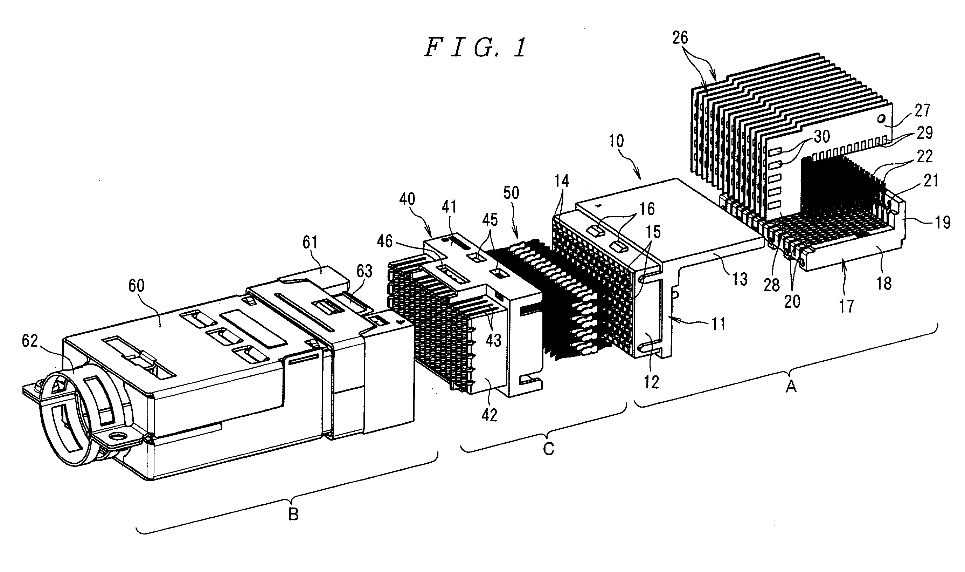

In Fig. 1, the connector assembly is constructed from a first connector A, a second connector B, and a relay connector C.

Here, the first connector A comprises an insulating housing 10 and a plurality of first boards 26 that are supported in a row in the housing 10.

The respective first boards 26 have the same function as the boards 120 shown in Fig. 8; each of these boards has a mounting part 27 for mounting on a motherboard (not shown in the figures), which extends in the forward-rearward direction (the left-right direction in Fig. 1), and a mating part 28 for mating with the relay connector C, which extends downward from the mounting part 27, and each board 26 is formed substantially in an L shape. Each first board 26 is constructed from an insulating board material such as FR4, and a plurality of signal conductor patterns (not shown in the figures) and a plurality of ground conductor patterns (not shown in the figures) which are formed so that these ground conductor patterns surround the signal conductor patterns with a specified distance retained between the two types of patterns are formed on the front and back surfaces of each first board 26. In the mating parts 28, the signal conductor patterns are terminated by conductive pads 30 that are disposed on the front end parts of these mating parts 28, while in the mounting parts 27, these signal conductor patterns are terminated by conductive pads 29 disposed on the lower end parts of the mounting parts 27. The ground conductor patterns are terminated by conductive pads 29 disposed on the lower end parts of the mounting parts 27.

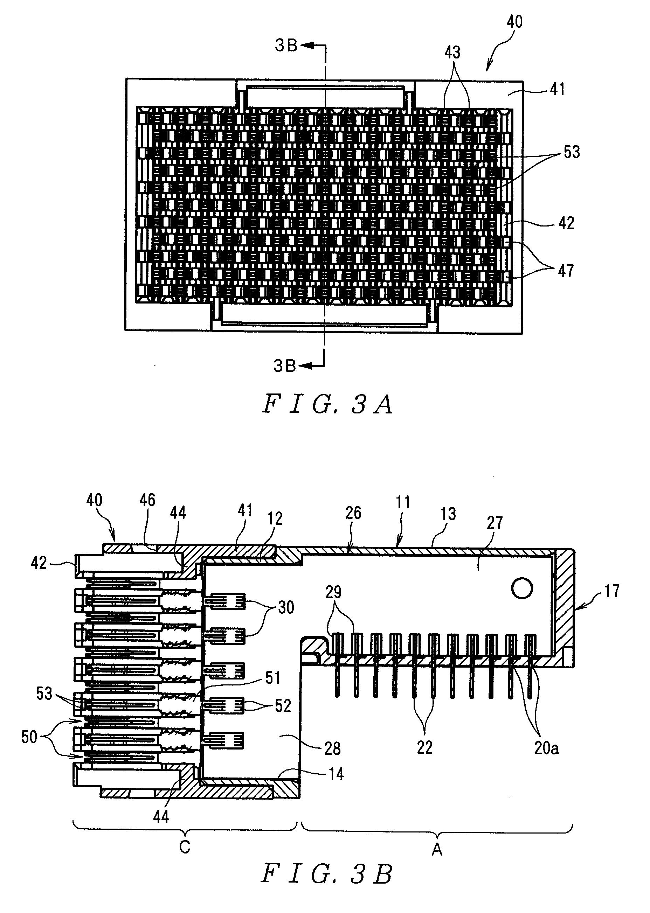

Meanwhile, the housing 10 comprises a front part housing 11 and an accommodating body 17. The front part housing 11 comprises a mating part 12 that extends in the vertical direction, and a top part 13 that extends rearward from the upper end of the mating part 12. This front part housing 11 is formed by molding an insulating resin. A plurality of slits 14 through which the mating parts 28 of the respective first board parts 26 are passed are formed in the mating part 12. The respective slits 14 extend in the vertical direction of the mating part 12, and pass through the mating part 12 in the forward-rearward direction as shown in Fig. 3 (B). As is shown in Fig. 3 (B), in a state in which the mating parts 28 of the first boards 26 are passed through the slits 14, the movement of the mating parts 28 of the first boards 26 in the vertical direction is restricted by the upper and lower walls of the slits 14, so that the first boards 26 are supported in the front part housing 11. Furthermore, the mating parts 28 of the first boards 26 are passed through until the front ends of the mating parts 28 are coplanar with the front end surface of the mating part 12 of the front part housing 11. Furthermore, a plurality of first female type contact part accommodating recesses 15 into which the first elastic contact arms 52 of the female type contacts 50 (described later) are inserted are formed in the respective slits 14. Moreover, a plurality of locking projections 16 are formed on the upper end surface of the mating part 12.

Furthermore, the accommodating body 17 comprises a platform part 18 that extends in the forward-rearward direction, and a rear vertical wall part 19 that extends upward from the rear end of the platform part 18. This accommodating body 17 is formed by molding an insulating resin. A plurality of grooves 20 into which the lower end parts of the mounting parts 27 of the respective first boards 26 are inserted are formed in the platform part 18. A plurality of contact disposition holes 20a for the disposition of the contacts 22 that contact the conductive pads 29 of the first boards 26 are formed in the bottom parts of the respective grooves 20. Furthermore, a plurality of grooves 21 into which the rear end parts of the mounting parts 27 of the respective first boards 26 are inserted are formed in the rear vertical wall part 19. The front part housing 11 and accommodating body 17 are locked to each other by locking means not shown in the figures.

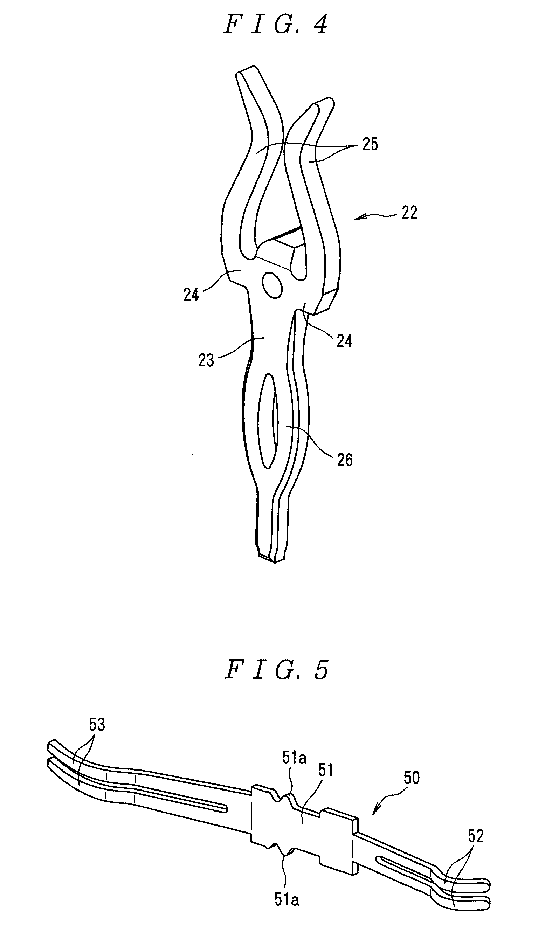

As is shown most clearly in Fig. 4, each of the contacts 22 comprises a base part 23 which is disposed inside the corresponding contact disposition hole 20a of the accommodating body 17, a pair of elastic contact arms 25 that extend upward from the upper end of the base part 23 via shoulder parts 24, and a press-fitting part 26 which extends downward from the base part 23. These contacts 22 are formed by stamping metal plates. The contacts 22 are devised so that when the base parts 23 are disposed inside the contact disposition holes 20a, the shoulder parts 24 are positioned on the bottom parts of the slits 20, so that downward movement is restricted. Furthermore, the pair of elastic contact arms 25 receive and contact the conductive pads 29 of the first boards 26, and the press-fitting parts 26 are press-fitted in the motherboard when the first connector A is mounted on the motherboard.

Next, the second connector B comprises a metal housing 60 and a plurality of second boards 64 that are attached in a row inside the housing 60.

The housing 60 comprises a mating part 61 which has a recess that receives the second connector mating part 42 of the relay connector C, and a cable lead-out part 62 which is disposed on the end part on the opposite side from the mating part 61. Latch arms 63 are formed on the mating part 61.

Furthermore, the respective second boards 64 are constructed from an insulating board material such as FR4, and a plurality of signal conductor patterns (not shown in the figures) and a plurality of ground conductor patterns (not shown in the figures) are formed on the front and back surfaces of each second board 64. In the end parts of the second boards 64 on the side of mating with the relay connector C, the signal conductor patterns are terminated by conductive pads 65 disposed on these mating-side end parts, while on the opposite sides, the signal conductor patterns are terminated by conductive pads 66 disposed on substantially the central portions of the second boards 64. Each of the second boards 64 is attached to the housing 60 so that the end part on the side of mating with the relay connector C protrudes into the recess of the mating part 61 of the housing 60.

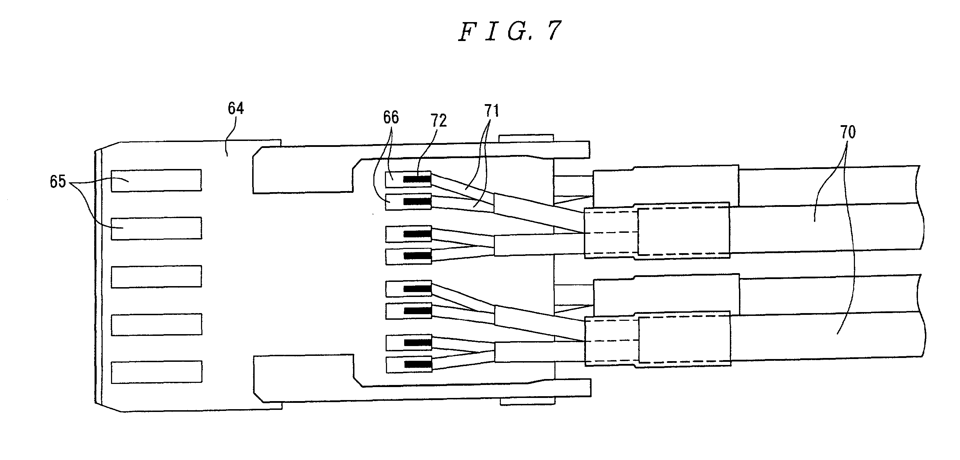

Furthermore, as is shown in Fig. 7, the core wire 72 of an insulated electrical wire 71 is connected by soldering to each of the conductive pads 66 of each second board 64. Furthermore, a plurality of cables 70 each bundling a plurality of insulated electrical wires 71 are led out to the outside via the cable lead-out part 62.

Furthermore, the relay connector C comprises an insulating housing 40 and a plurality of rows of female type contacts 50 that are press-fitted in the housing 40.

Here, the housing 40 comprises a first connector mating part 41 which has a recess that receives the mating part 12 of the first connector A, and a second connector mating part 42 that protrudes forward (to the left in Fig. 1) from the first connector mating part 41. The housing 40 is formed by molding an insulating resin. Furthermore, locking holes 45 in which the locking projections 16 formed on the mating part 12 of the first connector A are locked by insertion are formed in the upper end surface of the first connector mating part 41. Moreover, a plurality of slits 43 which receive the mating-side end parts of the second boards 64 of the second connector B are formed in the second connector mating part 42. Each of the slits 43 extends in the vertical direction of the second connector mating part 42 as shown in Figs. 1 through 3. Furthermore, a latch arm anchoring hole 46 in which one of the latch arms 63 of the second connector B is anchored is formed in the top of the second connector mating part 42.

Furthermore, as is shown in Fig. 3 (B) and Fig. 5, each female type contact 50 comprises a press-fitting base part 51 which is press-fitted in the bottom wall of the recess of the first connector mating part 41 of the housing 40, a pair of first elastic contact arms (first female type contact part) 52 which extend from the press-fitting base part 51 into the interior of the recess of the first connector mating part 41, and a pair of second elastic contact arms (second female type contact part) 53 which extend from the press-fitting base part 51 into the interior of a second female type contact part accommodating recess 47 formed in the corresponding slit 43 of the second connector mating part 42. Each female type contact 50 is formed by stamping and forming a metal plate. A plurality of barbs 51a which are anchored by press-fitting in the lower wall of the recess of the first connector mating part 41 are formed in the upper and lower edges of the press-fitting base part 51. Furthermore, the first elastic contact arms 52 are arranged so that these arms elastically contact the conductive pads 30 in which the signal conductor patterns of the first boards 26 are terminated when the relay connector C is mated with the first connector A. Moreover, the second elastic contact arms 53 are arranged so that these arms elastically contact the conductive pads 65 in which the signal conductor patterns of the second boards 64 are terminated when the second connector B is mated with the relay connector C.

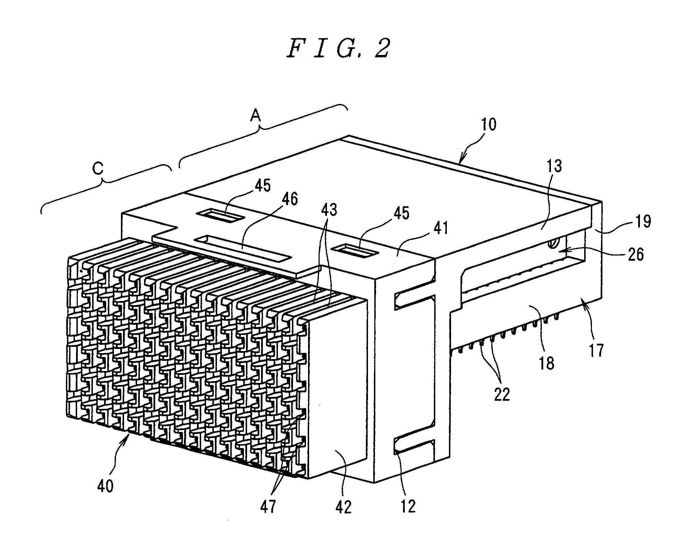

As is shown in Figs. 2 and 3, the relay connector C is mated with the first connector A and attached to the first connector A before the second connector B is mated. When the relay connector C and first connector A are to be attached, the mating part 12 of the first connector A is inserted into the recess of the first connector mating part 41 of the relay connector C, and the locking projections 16 of the first connector A are locked in the locking holes 45 of the relay connector C. When the relay connector C and first connector A are mated, the first elastic contact arms 52 of the female type contacts 50 of the relay connector C elastically contact the conductive pads 30 of the first boards 26, so that the female type contacts 50 are electrically continuous with the contacts 22 and motherboard via the signal conductor patterns on the first boards 26.

Furthermore, the second connector B is mated with the relay connector C after the relay connector C has been attached to the first connector A. As a result, the connector assembly is completed. When the second connector B and relay connector C are to be mated, the second connector mating part 42 of the relay connector C is inserted into the recess of the mating part 61 of the second connector B, and the latch arms 63 of the second connector B are anchored in the latch arm anchoring holes 46 of the relay connector C. When the second connector B and relay connector C are mated, the conductive pads 65 of the second boards 64 of the second connector B contact the second elastic contact arms 53 of the female type contacts 50 of the relay connector C. As a result, the insulated electrical wires 71 are electrically continuous with the female type contacts 50 of the relay connector C via the signal conductor patterns on the second boards 64, and are further electrically continuous with the contacts 22 and motherboard via the signal conductor patterns on the first boards 26 of the first connector A.

In this connector assembly, the conductive pads 30 in which the signal conductor patterns of the respective first boards 26 are terminated and the conductive pads 65 in which the signal conductor patterns of the respective second boards 64 are terminated are utilized as male type contacts, and these male type contacts contact the female type contacts 50 of the relay connector C. Furthermore, the conductive pads 29 in which the signal conductor patterns of the respective first boards 26 are terminated are connected to the motherboard via the contacts 22, while the insulated electrical wires 71 are connected by soldering to the conductive pads 66 in which the signal conductor patterns of the respective second boards 64 are terminated. As a result, the impedance of the signal paths inside the connector assembly can be maintained at a uniform value, so that data signals can be transmitted at a high speed.

Furthermore, in this connector assembly, the second connector B is mated with the relay connector C in a state in which the relay connector C has already been attached to the first connector A; accordingly, the second elastic contact arms 53 of the female type contacts 50 (disposed in the relay connector C) that are contacted by the conductive pads 65 of the second connector B are easily damaged. In cases where the second elastic contact arms 53 of the female type contacts 50 are damaged, or in cases where the first elastic contact arms 52 of the female type contacts 50 are damaged, the corresponding female type contacts 50 are replaced by the following method.

First, after the second connector B is removed from the relay connector C, the relay connector C is removed from the first connector A. Then, the corresponding female type contact 50 is removed from the housing 40, and a new female type contact 50 is press-fitted into the housing 40. Then, it is necessary merely to mate the relay connector C with the first connector A, and then to mate the second connector B with the relay connector C. Accordingly, in the connector assembly of the present embodiment, there is no need to remove the relay connector C from the motherboard, etc., when female type contacts 50 are replaced, and damaged female contacts 50 can be replaced by the simple method described above.

An embodiment of the present invention has been described above. However, the present invention is not limited to this embodiment; various alterations or modifications are possible.

For example, the connector assembly is arranged so that the relay connector C is first attached to the first connector A; however, it would also be possible to attach the relay connector C to the second connector B, and to mate the first connector A with the relay connector C.

Furthermore, the first female type contact parts and second female type contact parts of the female type contacts 50 are respectively constructed from elastic contact arms 52 that elastically contact the conductive pads 30 formed on the surfaces of the first boards 26 and elastic contact arms 53 that elastically contact the conductive pads 65 formed on the surfaces of the second boards 64; however, it would also be possible to devise these contact parts so that the parts receive the end parts of the first boards 26 or second boards 64 and contact the conductive pads 30 or 65 on the surfaces of the boards.

As was described above, in the connector assembly according to Claim 1, the connector assembly comprises a first connector having a plurality of first boards which have conductor patterns formed on the surfaces thereof, a second connector having a plurality of second boards which have conductor patterns formed on the surfaces thereof, and a relay connector which is attached to the first connector or second connector, and in which a plurality of female type contacts having first female type contact parts that contact the conductor patterns of the first boards and second female type contact parts that contact the conductor patterns of the second boards are press-fitted. Accordingly, the replacement of the easily damaged female type contacts can easily be accomplished.

Furthermore, the connector assembly according to Claim 2 is the invention according to Claim 1, wherein the first connector is mounted on a motherboard, and a plurality of electrical wires are connected by soldering to the second boards of the second connector. Accordingly, electrical connections between the motherboard and the electrical wires can easily be established.

While the contacts 50 are described as being female type contacts the contact arms of each contact may rest against contact pad(s) on one side only of a respective board.

## Claims

1. A connector assembly comprising:
a first connector (A) having a plurality of first boards (26) which have conductor patterns formed on the surfaces thereof;
a second connector (B) having a plurality of second boards (64) which have conductor patterns formed on the surfaces thereof; and
a relay connector (C) which is attached to the first connector (A) or second connector (B), and in which a plurality of female type contacts (50) having first female type contact parts (52) that contact the conductor patterns of the first boards (26) and second female type contact parts (53) that contact the conductor patterns of the second boards (64) are press-fitted.

2. The connector assembly according to Claim 1, wherein the first connector (A) is mounted on a motherboard, and a plurality of electrical wires (71) are connected by soldering to the second boards (64) of the second connector (B).
